(19) Europäisches Patentamt
European Patent Office
Office européen des brevets

(11) **EP 2 557 916 B1**

(12) **EUROPÄISCHE PATENTSCHRIFT**

(45) Veröffentlichungstag und Bekanntmachung des Hinweises auf die Patenterteilung:
**22.11.2017  Patentblatt 2017/47**

(21) Anmeldenummer: **11714054.1**

(22) Anmeldetag: **13.04.2011**

(51) Int Cl.:
*A01N 25/10* *(2006.01)*      *A01N 25/34* *(2006.01)*
*A01N 53/00* *(2006.01)*      *A01P 7/04* *(2006.01)*

(86) Internationale Anmeldenummer:
**PCT/EP2011/055822**

(87) Internationale Veröffentlichungsnummer:
**WO 2011/141260 (17.11.2011 Gazette 2011/46)**

(54) **INSEKTIZIDHALTIGES NETZARTIGES FLÄCHENGEBILDE**

NON-WOVEN FABRIC CONTAINING INSECTICIDE

INTISSÉ CONTENANT UN INSECTICIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2010   US 324564 P**
**15.04.2010   EP 10159990**

(43) Veröffentlichungstag der Anmeldung:
**20.02.2013   Patentblatt 2013/08**

(73) Patentinhaber: **Bayer Intellectual Property GmbH**
**40789 Monheim (DE)**

(72) Erfinder:
• **SONNECK, Rainer**
**51375 Leverkusen (DE)**

• **BÖCKER, Thomas**
**42799 Leichlingen (DE)**
• **HORN, Karin**
**42697 Solingen (DE)**
• **NENTWIG, Guenther**
**51381 Leverkusen (DE)**
• **HEINEMANN, Maren**
**51467 Bergisch Gladbach (DE)**
• **KÖNIG, Thomas**
**51375 Leverkusen (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**WO-A2-2008/032844      WO-A2-2009/121580**

**Beschreibung**

Die vorliegende Erfindung betrifft ein insektizidhaltiges netzartiges Flächengebilde, das wenigstens einen eingebetteten insektiziden Wirkstoff in der Polymermatrix enthält und über eine ausgezeichnete Waschbeständigkeit verfügt, sowie die aus diesem netzartigen Flächengebilde hergestellten Produkte und deren Verwendung zum Schutz von Mensch, Tier und Pflanzen gegen Arthropoden, besonders zur Bekämpfung von Insekten.

Es ist bereits lange bekannt, dass Menschen durch mit Insektizid beschichtete Bettnetze im Schlaf vor Stichen von Arthropoden geschützt werden können. Dies ist besonders wichtig in Ländern, in denen die Arthropoden Krankheiten übertragen (beispielsweise Malaria). Beschichtete Gewebe können auch als Vorhänge vor Fenstern oder Türen benutzt werden, um in die Wohnungen eindringende Arthropoden zu bekämpfen. Auch das Abdecken von Gemüse oder Obst mit beschichteten Geweben zum Schutz vor Arthropoden ist bekannt. Auf diese Weise kann die Kontamination der später gegessenen Pflanzenteile mit Insektiziden minimiert werden.

Die bekannten Materialien für Netze sind im Wesentlichen Polyester und Polyethylen, die allerdings nur eine begrenzte Haltbarkeit aufweisen (vor allem Polyester) und teils bei Berührung als unangenehm spröde empfundene Oberflächen (vor allem Polyethylen) aufweisen. Es wäre daher wünschenswert, Materialien basierend auf anderen, länger haltbaren, mechanisch stärker beanspruchbaren Polymeren zu entwickeln.

In der WO-A2 2008/004711 werden beispielsweise netzartige, insektizidhaltige Materialien auf Basis von Polyolefinen wie Polyethylen und/oder Polypropylen offenbart. Als geeignete insektizide Wirkstoffe werden Pyrethroide genannt. Die Herstellung des insektiziden Materials erfolgt durch Schmelzcompoundierung des thermoplastischen Polymers mit dem Insektizid und anschließender Extrusion des Materials.

Die WO-A 2008/032844 beschreibt ebenfalls ein Insekten-abweisendes Material, welches durch Schmelz-Spinnen einer Mischung aus Insektizid und Polyethylen erhalten wird. Als mögliche Insektizide werden Pyrethroide genannt.

Die Benutzung von Polypropylen ist auch bekannt von insektiziden Verdampferplättchen (z.B. WO 97/29634, WO 99/01030, WO 05/044001). Dabei wird ein insektizider Wirkstoff in eine Polypropylenmatrix eingebettet und durch Erhitzen auf über 100 °C in kurzer Zeit freigesetzt, um z.B. einen Raum zu behandeln. Eine Benutzung bei Raumtemperatur und die Nutzung in lang wirkenden Materialien wird dort nicht beschrieben, ebenso wenig die Kombination mit Additiven WO 2009/121580 beschreibt u.a. Deltamethrinhaltige Fasern aus Polypropylen. Die Benutzung von Netzen aus Polyethylenterephthalat (PET), die mit Wirkstoff beschichtet werden, ist z.B. von den Produkten Permanet® (Vestergaard Frandsen SA, Schweiz) oder Dawa® Plus (Tana Netting Co. Ltd., Bangkok, Thailand) bekannt.

Nachteilig an den aus dem Stand der Technik bekannten Materialien ist jedoch, dass diese die Kriterien der WHOPES-Richtlinie (siehe "Guidelines for laboratory and field testing of long-lasting insecticidal mosquito nets", 2005, http://www.who.int/whopes/guidelines/en/) für insektzidhaltige, lang wirkende Moskitonetze nur bis 20 Waschungen erfüllen, was bedeutet dass solche Materialien beim Waschen stark an aktivem Wirkstoff und somit schon nach ca. 20 Waschzyklen ihre biologische Wirksamkeit verlieren.

Der Verlust von Wirkstoff aus einem mit Wirkstoff ausgerüstetem textilen Flächengebilde, beispielsweise aus einem mit Insektizid ausgerüsteten Netz, lässt sich anhand eines Retentionsindices beschreiben (siehe: "Report of the Eleventh WHOPES Working Group Meeting", WHO, HQ, Geneva, 10-13 December 2007, Annex 1). Dabei wird das polymere Material wiederholt einer in der WHOPES-Richtlinie definierten Behandlung unterzogen.

Entsprechend der WHOPES-Richtlinie nach Phase I müssen die getesteten Textilien nach der Durchführung von 20 Waschungen noch eine bestimmte biologische Wirksamkeit aufweisen. So muss entweder der Knock-down nach 60 Minuten zwischen 95% und 100% oder die Mortalität nach 24 Stunden zwischen 80% und 100% betragen. Der Eintritt des sogenannten Knock-down nach der Anwendung von Insektiziden auf Moskitos gilt als der erste sichtbare Beweis ihrer Wirksamkeit: die Moskitos können sich nicht mehr koordiniert bewegen, nicht mehr fliegen oder laufen und fallen meist auf den Rücken, ohne jedoch schon tot zu sein.

Vor der Behandlung und im Anschluss an die Behandlung wird der Wirkstoffgehalt des mit Wirkstoff ausgerüsteten textilen Flächengebildes bestimmt. Der Retentionsindex nach n Behandlungen wird berechnet aus der n-ten Wurzel des Quotienten aus dem Wirkstoffgehalt nach n Behandlung geteilt durch den Wirkstoffgehalt vor der Behandlung.

Für textile netzartige Flächengebilde, die für die Vektorkontrolle eingesetzt werden, ist es wünschenswert, dass der Retentionsindex über 95% liegt, damit auch nach 35 Waschzyklen eine ausreichende biologische Wirksamkeit besteht. Die aus dem Stand der Technik bekannten polymeren insektizidhaltigen Materialien weisen bei der Bestimmung des Retentionsindex zu geringe Werte (zwischen 50 und 90% nach 5 Waschungen) auf, die eine Wirksamkeit des Materials nur für eine geringere Anzahl an Waschungen und somit einer geringeren Nutzungsdauer gewährleisten.

Für textile Flächengebilde, die für die Vektorkontrolle eingesetzt werden, ist die Wirksamkeit direkt nach einem Waschvorgang von großer Bedeutung. Flächengebilde aus Polyethylen beispielsweise, wie sie aus WO-A 2008/032844 bekannt sind, verlieren nach einem Waschzyklus für einige Tage ihre Wirksamkeit (die sogenannte Regenerationszeit), und müssen zusätzlich eine gewisse Zeit bei erhöhter Temperatur verweilen, um die Wirksamkeit wieder herzustellen. Diese Vorgehensweise ist für die Benutzer umständlich und impliziert immer eine Wahrscheinlichkeit, dass dieser Schritt nicht durchgeführt wird und dass das textile Flächengebilde daher an Schutzfunktion verliert. Wünschenswert ist eine Regenerationszeit von weniger als zwei Stunden.

Aufgabe der vorliegenden Erfindung bestand in der Bereitstellung eines insektizidhaltigen, netzartigen polymeren Flächengebildes, welches die Anforderungen der oben genannten WHOPES-Richtlinie sicher erfüllt. Die Regenerationszeit sollte weniger als zwei Stunden betragen. Darüber hinaus sollte die Menge der einzusetzenden Wirkstoffkomponente so gering wie möglich gehalten werden, ohne dass die insektizide Wirkung beeinträchtigt ist. Wünschenswert sind weiterhin eine schnell einsetzende insektizide Wirkung, eine gleichmäßige Wirkstoff-Freisetzung sowie eine möglichst einfache und kostengünstige Herstellung.

Die Aufgabe wird durch das erfindungsgemäße insektizidhaltige, netzartige, polymere Flächengebilde gelöst.

Gegenstand der vorliegenden Erfindung ist somit ein netzartiges Flächengebilde auf Basis eines insektizidhaltigen Polymermaterials, welches gemäß WHOPES-Richtlinie (Phase I) nach der Durchführung von mindestens 25, vorzugsweise mindestens 30 und noch bevorzugter mindestens 35 Waschungen einen Knock-down nach 60 Minuten zwischen 95% und 100% oder eine Mortalität nach 24 Stunden zwischen 80% und 100% aufweist.

Erfindungsgemäß wird unter der "WHOPES-Richtlinie" die Richtlinie "Guidelines for laboratory and field testing of long-lasting insecticidal mosquito nets", 2005) verstanden. Diese ist abrufbar unter folgender Internetadresse: http://www.who.int/whopes/guidelines/en/.

Gemäß WHOPES-Richtlinie ist eine "Waschung" folgendermaßen definiert: ein netzartiges Flächengebilde (25 cm x 25 cm) wir in einem 1 Liter Becher mit 0,5 Liter deionisiertem Wasser und 2 g/l "Savon de Marseille" Seite (pH 10-11), die kurz vor der Zugabe des netzartigen Flächengebildes vollständig im deionisiertem Wasser aufgelöst wird. Nach Zugabe des netzartigen Flächengebildes wird der Becher sofort in ein 30°C warmes Wasserbad eingebracht und 10 Minuten mit 155 Bewegungen pro Minute geschüttelt. Die netzartigen Flächengebilde werden dann aus dem Becher genommen und zweimal jeweils für 10 Minuten mit reinem, deionisiertem Wasser abgespült bei gleichen Schüttelbewegungen wie vorher erwähnt. Danach werden die netzartigen Flächengebilde bei Raumtemperatur getrocknet und zwischen den Waschungen bei 30°C in der Dunkelheit gelagert.

Erfindungsgemäß bezeichnet der Begriff "Knock-down" einen Zustand eines Tieres in Rücken- oder Seitenlage, das noch zu unkoordinierter Bewegung bis hin zu kurzem Auffliegen fähig ist. Erfindungsgemäß bezeichnet der Begriff "Mortalität" einen unbeweglichen Zustand eines Tier in Rücken- oder Seitenlage.

Bevorzugt weist das erfindungsgemäße netzartige Flächengebilde nach mindestens 5 Waschungen gemäß WHOPES-Richtlinie einen Retentionsindex r der Formel (I)

$$\mathrm{r} = {}^{n}\sqrt{\left(t_n / t_0\right)} \qquad (\mathrm{I})$$

in welcher

$t_n$ = Gesamtgehalt Wirkstoff nach n Waschungen (g/kg),
$t_0$ = Gesamtgehalt Wirkstoff nach 0 Waschungen (g/kg) und
n = Anzahl der Waschungen bedeutet,
von mindestens 95% auf.

Das erfindungsgemäße netzartige Flächengebilde auf Basis eines insektizidhaltigen Polymermaterials verfügt bevorzugt über eine Regenerationszeit von weniger als 24, bevorzugt von weniger als 8, besonders bevorzugt von weniger als 2 Stunden (getestet nach WHOPES-Richtlinie (Phase I). Erfindungsgemäß bezeichnet der Begriff "Regenerationszeit" die Zeit, die vergeht, bis die ursprüngliche Wirksamkeit wieder erreicht wird.

Erfindungsgemäß ist das polymere Material Polypropylen. Aus dem Stand der Technik sind eine Vielzahl Polypropylenen. Aus dem Stand der Technik sind eine Vielzahl von Polypropylenen bekannt. Grundsätzlich lassen sich die Polypropylene nach der Art der Synthese unterscheiden. Der Hauptteil der Polypropylene wird in Gegenwart von Ziegler-Natta-Katalysatoren im Suspensionsverfahren oder insbesondere im sogenannten Gasphasenverfahren hergestellt (vgl. Kaiser "Kunststoffchemie für Ingenieure", Seite 246 bis 254). Bei der Herstellung im Gasphasenverfahren können auch spezielle Katalysatoren wie Metallocene eingesetzt werden. Die mit Metallocenen als Katalysator hergestellten Polymere sind als Polymermatrix für das erfindungsgemäß einzusetzende insektizidhaltige Polymermaterial besonders geeignet. Die Schmelzpunkte der mit Metallocen-Katalysatoren hergestellten Polypropylene liegen zumeist deutlich unter denen der mit konventionellen heterogenen Katalysatorsystemen verfügbaren Polypropylenen. Die statistisch über die Polymerkette verteilten Fehlstellen verringern das Kristallisationsvermögen der Metallocen-Polypropylene, die in der Regel Schmelzpunkte zwischen 135 und 150°C aufweisen. Die Verwendung von Metallocenen als Katalysatoren für die Synthese von Polypropylene ermöglicht auch eine bessere stereospezifische Polymerisation, d.h. die Taktizität der Polypropylene und damit die Eigenschaften lassen sich besser steuern. Die unter Verwendung von Metallocenen katalysierten Polypropylene weisen eine engere Molmassenverteilung auf, d.h. sie enthalten so gut wie keine in Heptan löslichen Anteile mehr.

Neben der Art des bei der Synthese verwendeten Katalysators lassen sich Polypropylene auch entsprechend der räumlichen Anordnung der Seitengruppen der Kohlenstoffhauptkette unterscheiden. Unterschieden wird in isotaktisches, ataktisches und syndiotaktisches Polypropylen, wobei diese Formen auch in Mischungen auftreten können. Für das erfindungsgemäß einzusetzende insektizidhaltige Polyolefinmaterial wird bevorzugt Polypropylen mit einer überwiegend isotaktischen Struktur eingesetzt.

Eine weitere Unterscheidung von Polypropylenen kann anhand der jeweiligen Anwendungsgebiete erfolgen. So werden die Eigenschaften der Polymere u.a. speziell für die Anforderungen im Spritzguss, in der Extrusion, im Blasformen, beim Pressen, beim Kalandrieren und beim Schmelzespinnen angepasst. Für das erfindungsgemäße insektizidhaltige Polymermaterial werden bevorzugt Polypropylene eingesetzt, die für den Schmelzespinnprozess zur Herstellung von Filamenten, Fasern und Spinnvliesen vorgesehen sind. Besonders bevorzugt werden Polypropylene eingesetzt, die für die Herstellung von Multifilamentfasern mit einem geringen Denier von 50 bis 150 Denier verwendet werden können. Dies sind z.B. Polymere mit dem Markennamen Metocene® und Moplen® (Fa. LyondellBasell, Niederlande), Repol® (Reliance Industries Limited, Indien), Yuplen® (SK corporation Südkorea), Seetec® (LG Chemical, Südkorea) und Achieve® (ExxonMobile Chemical Company, USA) Ganz besonders bevorzugt werden Metallocenkatalysierte Polypropylene eingesetzt, wie z.B. Metocene® HM562S, Schmelztemperatur 145°C (Fa. LyondellBasell, Niederlande) und Achieve® 3845 (ExxonMobile Chemical Company, USA).

Bei der Herstellung der eingesetzten Polymermaterialien können Additive zugegeben werden, die zur Stabilisierung oder Verbesserung der Verarbeitungseigenschaften in das Polymer eingearbeitet werden. Geeignete Additive sind beispielsweise alkylierte Monophenole, Alkylthiomethylphenole, Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von $\beta$-(3,5-Di-tert-butyl-4-hydroxyphenyl)propionsäure mit ein- oder mehrwertigen Alkoholen, Ester von $\beta$-(5-tert-Butyl-4-hydroxy-3-methylphenyl)propionsäure mit ein- oder mehrwertigen Alkoholen, Ester von $\beta$-(3,5-Dicyclohexyl-4-hydroxyphenyl)propionsäure mit ein- oder mehrwertigen Alkoholen, Ester von 3,5-Di-tert-butyl-4-hydroxyphenylessigsäure mit ein- oder mehrwertigen Alkoholen, Amide der $\beta$-(3,5-Di-tert-butyl-4-hydroxyphenyl)propionsäure, Ascorbinsäure (Vitamin C) und aminische Antioxidantien. Ebenfalls eingesetzt werden können Thiosynergisten, sekundäre Antioxidantien, Phosphite und Phosphonite.

Ebenfalls können bei der Herstellung der eingesetzten Polymermaterialien Metalldesaktivatoren, Peroxidfänger, basische Costabilisatoren, Keimbildner, Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel, Benzofuranone und Indolinone, fluoreszierende Weichmacher, Formtrennmittel, flammhemmende Additive, antistatische Mittel wie Sulfonatsalze, Pigmente sowie organische und anorganische Farbstoffe sowie Verbindungen, die Epoxygruppen oder Anhydridgruppen enthalten, verwendet werden.

Zur Herstellung des erfindungsgemäßen Flächengebildes wird zunächst das Polymermaterial, bevorzugt Polypropylen, ein insektizider Wirkstoff sowie gegebenenfalls ein UV-Stabilisator und gegebenenfalls weitere Insektizide oder Additive zusammen oder getrennt bei Temperaturen zwischen 120 und 250°C, bevorzugt 150 und 230°C aufgeschmolzen und anschließend erfolgt die Abkühlung und Erstarrung der polymeren Mischung sowie deren Zerteilung in Granulate.

Neben den Insektiziden können gegebenenfalls (und werden vorzugsweise) UV-Stabilisatoren (d.h. UV-Absorber und/oder Lichtstabilisatoren) in einer Menge von 0,01 bis 15 Gew.-%, bevorzugt 0,03 bis 8 Gew.-%, bezogen auf die Gesamtmasse der Zusammensetzung des insektizidhaltigen Polymermaterials eingesetzt werden. Für die Durchführung des Verfahrens geeignete UV-Absorber und/oder Lichtstabilisatoren sind beispielsweise 2-(2'-Hydroxyphenyl)benzotriazole, 2-Hydroxybenzophenone, Ester von substituierten und unsubstituierten Benzoesäuren, Acrylate, Nickelverbindungen, sterisch gehinderte Amine, Oxamide, 2-(2-Hydroxyphenyl)-1,3,5-triazine sowie Gemische der genannten Verbindungen. Bevorzugt werden keine sterisch ungehinderte Amine als UV-Stabilisatoren eingesetzt, sondern 2-(2'-Hydroxyphenyl)benzotriazole, 2-Hydroxybenzophenone, Ester von substituierten und unsubstituierten Benzoesäuren, Acrylate, Nickelverbindungen, Oxamide, 2-(2-Hydroxyphenyl)-1,3,5-triazine sowie Gemische der genannten Verbindungen. Besonders bevorzugt sind Triazinverbindungen und Butrimezol. Ganz besonders bevorzugt sind Phenol, 2-(2H-benzotriazol-2-yl)-6-dodecyl-4-methyl-, branched and linear (CAS 125304-04-3) und 2-(5-chloro-2H-benzotriazole-2-yl)-6-(1,1-dimethylethyl)-4-methyl-phenol (CAS 3896-11-5).

Das Aufschmelzen des einzusetzenden Polymaterials erfolgt beispielsweise in einem Einschneckenextruder, einem Doppelschneckenextruder, einem Mehrschneckenextruder oder einem Co-Kneter.

Als Einschneckenextruder können beispielsweise Glatt- oder Nutbuchsenextruder oder ein Transfermix eingesetzt werden. Bevorzugt wird ein Nutbuchsenextruder.

Doppelschneckenextruder können entweder gleich- oder gegenläufig ausgeführt werden. Die Doppelschneckenextruder können weiterhin dicht kämmend oder tangierend ausgeführt werden. Bevorzugt wird eine dicht kämmende, gleichläufige Ausführung.

Mehrschneckenextruder verfügen über mindestens drei Wellen, bevorzugt vier bis zwölf. Die Wellen können jeweils paarweise dicht kämmend angeordnet sein, wobei jeweils die Wellenpaare tangential und gegenläufig zueinander angeordnet sind. Weiterhin können die Wellen eines Mehrschneckenextruders alle gleichläufig angeordnet sein, wobei jede Welle in je zwei Nachbarwellen eingreift. Eine Sonderform des Mehrschneckenextruders ist der Planetwalzenextruder, bei dem eine angetriebene Zentralspindel frei umlaufende Planetspindeln antreibt, die wiederum in einem festen Gehäuse umlaufen. Zentralspindel, Planetenspindeln und Gehäuse haben dabei eine Zahnrad-Verzahnung.

Besonders bevorzugt wird für das erfindungsgemäße Verfahren ein dichtkämmender, gleichläufiger Doppelschneckenextruder eingesetzt.

Der Aufbau der Extruderschnecke wird dem jeweiligen Anwendungsfall angepasst.

Bei Raumtemperatur feste Insektizide, gegebenenfalls UV-Stabilisatoren und andere Additive werden in einer bevorzugten Ausführung gemeinsam mit dem Ausgangs-Polymer-Granulat in den Einzug des Extruders dosiert. In einer anderen bevorzugten Ausführung werden bei Raumtemperatur feste Insektizide, UV-Stabilisatoren und andere Additive aufgeschmolzen und flüssig dosiert. Die Extrudergehäuse sind auf 4 bis 250°C temperiert. Das Extrudergehäuse am Einzug des Extruders ist bevorzugt auf 4 bis 50°C gekühlt. Die übrigen Extrudergehäuse sind bevorzugt auf 100 bis 250°C und besonders bevorzugt auf 140 bis 250°C temperiert. Im Extruder werden das Polymer und je nach Schmelzpunkt auch das Insektizid sowie der UV-Stabilisator geschmolzen und vermischt. Das Gemisch wird durch eine Lochdüse extrudiert und granuliert. Die Additive können auch weitere anorganische oder organische Füllstoffe wie beispielsweise organische Pigmente, Titandioxid, Ruß oder Talkum umfassen.

Die Verweilzeiten beim Aufschmelzen und Mischen, in denen das Polymer flüssig ist, betragen zwischen 3 und 300 Sekunden, bevorzugt zwischen 5 und 120 Sekunden und besonders bevorzugt zwischen 8 und 30 Sekunden.

Dabei kann die Mischung des Insektizids, gegebenenfalls des UV-Stabilisators und anderer Additive mit dem geschmolzenen Polymer in demselben Apparat erfolgen, in dem auch das Aufschmelzen des Polymers erfolgt, oder in einem weiteren Apparat. Für die Mischung eignen sich alle oben genannten Extruder. Eine weitere Möglichkeit ist es, das Insektizid und gegebenenfalls die Additive in einem statischen Mischer mit dem Polymer zu vermischen. Bevorzugt wird die Mischung mit einem statischen Mischer durchgeführt.

Wird das Insektizid oder die Additive in flüssiger Form zugegeben, so wird es in der Regel aufgeschmolzen und in einem Vorlagebehälter zwischengespeichert, von dem es dann in den Mischapparat gefördert wird. Die Förderung kann beispielsweise über eine Pumpe oder über einen erhöhten Vordruck erfolgen. Die Temperatur des Vorlagebehälters wird so gewählt, dass das Insektizid stabil ist und die Viskosität des Insektizids hinreichend klein ist, um gut pumpbar zu sein. Vorteilhaft ist in diesem Fall die Beheizung des Vorlagebehälters, der Pumpe und aller Leitungen. Die Dosierung in den Mischapparat geschieht bevorzugt über ein Nadelventil. Die dosierte Menge an Insektizid wird bevorzugt durch einen geeigneten Massendurchflussmesser, z.B. nach dem Coriolis-Prinzip oder nach dem Hitzdraht-Prinzip, gemessen und über die Pumpe oder ein Ventil auf geringe Abweichungen geregelt.

Im Anschluss an das Mischen erfolgt in einer bevorzugten Ausführung eine Abkühlung und Erstarrung der Polymermaterialien sowie die Zerteilung in Granulate. Dies kann beispielsweise nach dem geläufigen Stranggranulationsverfahren geschehen, bei dem an einer oder mehrere Düsen Endlosstränge ausgeformt werden, die dann an Luft oder Wasser gekühlt, zum Erstarren gebracht und anschließend in einem Granulator auf die gewünschte Größe zerkleinert werden. Eine weitere Methode ist eine Unterwassergranulation, bei der die Schmelze aus der Düse unter Wasser austritt, dort und von einem umlaufenden Messer geschnitten und anschließend im Wasser gekühlt, danach abgesiebt und getrocknet wird. Eine weitere Methode ist die Wasserringgranulation, in der das Polymer an Luft in schmelzeflüssigem Zustand geschnitten wird und danach durch Zentrifugalkräfte zur Kühlung in einen rotierenden Wasserring geschleudert wird. Besonders bevorzugt sind die Methode der Unterwassergranulation und das Stranggranulationsverfahren.

In einer Ausführung des erfindungsgemäßen Verfahrens wird nur durch den Mischprozess hergestelltes Polymermaterial einem anschließenden Verarbeitungsprozess zugeführt. Die Menge an Insektizid im einfachen Mischprozess beträgt 0,05 bis 15 Gew.-%, bevorzugt 0,2 bis 10 Gew.-%, besonders bevorzugt 0,4 bis 8 Gew.-%, bezogen auf die Gesamtmasse.

In einer weiteren Ausführung wird ein Polymermaterial mit einer erhöhten Konzentration an insektizidem Wirkstoff in Granulatform hergestellt (ein sogenannter Masterbatch) und einem anschließenden Verarbeitungsprozess in einer Mischung mit unbehandeltem Polymer zugeführt. In diesem Fall ist die Konzentration an Insektizid in dem erfindungsgemäßen Masterbatch-Polymermaterial erhöht, bevorzugt auf eine Konzentration zwischen 3 bis 20 Gew.-%, besonders bevorzugt 5 bis 15 Gew.-% bezogen auf die Gesamtmasse.

In einer weiteren Ausführung wird in einem ersten Schritt das erfindungsgemäße Polymermaterial als Masterbatch hergestellt, der im Anschluss durch Aufschmelzen und Mischen mit unbehandeltem Polymer und eventuell weiteren Additiven wiederum zu einem erfindungsgemäßen Polymermaterial weiterverarbeitet wird, das in Form von Granulaten anfällt.

Der anschließende Verarbeitungsprozess kann beispielsweise darin bestehen, dass die so erhaltenen Granulate des erfindungsgemäßen Polymermaterials in einem Verarbeitungsschritt zu Formteilen wie z.B. Folien, Luftpolsterfolien, Filme, Profile, Blätter, Drähte, Fäden, Bänder, Kabel- und Rohrverkleidungen, Gehäuse für elektrische Geräte (z.B. in Schaltkästen, Flugzeugen, Kühlschränken etc.) verarbeitet werden. Bevorzugt werden in einem Extrusionsprozess Folien hergestellt. Diese Folien können ein- oder mehrlagig hergestellt werden. Dem Fachmann sind Methoden bekannt, mit denen mehrlagige Folien hergestellt werden können. Hierzu zählen beispielsweise die Coextrusion oder das Kaschieren. Bevorzugt wird eine mehrlagige Folie, die aus einer Schicht erfindungsgemäßen Materials besteht sowie aus einer oder mehreren Schichten anderen Materials. Diese anderen Materialien können beispielsweise Polyethylen (HDPE, LDPE, LLDPE) oder Polyethylen-Copolymere, Polypropylen, Haftermittler wie beispielsweise Ethylen-Vinylacetat-Copolymer, Polyamid, Polycarbonat, Polyvinylchlorid, Polystyrol, Polyester wie beispielsweise Polyethylenterephthalat oder Polybutylenterephthalat, Cellophan, Polylactid, Celluloseacetat, oder Blends dieser Polymere sein. Diese Polymere können in reiner Form oder als Blends vorliegen und können Additive und weitere anorganische oder organische Füllstoffe wie beispielsweise organische Pigmente, Titandioxid, Ruß oder Talkum enthalten.

Besonders bevorzugt besteht der anschließende Verarbeitungsprozess darin, dass das insektizidhaltige Polymermaterial in einem anschließenden Spinnprozess zu Fasern, Garnen, Filamenten oder Fäden weiterverarbeitet wird. Erfindungsgemäß wird als Insektizid Deltamethrin eingesetzt.

Die Konzentration des insektiziden Wirkstoffs kann in dem Polymermaterial in einem relativ breiten Konzentrationsbereich von z.B. 0,05 bis 15 Gew.-%, bevorzugt 0,2 bis 10 Gew.-%, besonders bevorzugt 0,4 bis 8 Gew.-% variiert werden. Die Konzentration sollte dabei je nach Anwendungsgebiet so gewählt werden, dass den Anforderungen bezüglich insektizider Wirksamkeit, Haltbarkeit und Toxizität genügt wird. Eine Anpassung der Eigenschaften des Materials kann auch durch die Mischung von Insektiziden in dem Polymermaterial, durch die Verblendung von erfindungsgemäßen Materialien, die unterschiedliche Insektizide enthalten, geschehen oder durch die Verwendung von erfindungsgemäßen Materialien, die unterschiedliche Insektizide enthalten, die in Kombination miteinander verwendet werden, z.B. als Mosaik-Netze. Auf diese Weise können maßgeschneiderte textile Flächengebilde erhalten werden.

Die Herstellung von Filamenten, Fasern, Fäden und Garnen erfolgt dadurch, dass das insektizidhaltige Polymermaterial zunächst aufgeschmolzen, zu Spinnfäden geformt und abgekühlt wird, die entstandenen Spinnfäden über eine Streckanlage geführt und verstreckt werden und optional anschließend die Fixierung der Filamente, Fasern, Fäden und Garne erfolgt.

Bevorzugt wird bei diesem Verfahren während der Verspinnung eine Spinnpräparation eingesetzt.

Die Herstellung der Fäden oder Filamente erfolgt nach dem Mischprozess durch Schmelzespinnen wie z.B. beschrieben in der DE-A 41 36 694 (S. 2, Z. 27 - 38, S. 5, Z. 45 - S. 6, Z. 23) oder DE-A 10 2005 054 653 ([0002]). In diesem Verfahren wird das hergestellte insektizide Polymer in einem Einwellenextruder geschmolzen und mit Hilfe einer Zahnradpumpe durch eine Düsenplatte gedrückt. Der Düsenplatte ist ein Filterpaket vorgeschaltet. Die aus der Düsenplatte austretenden Polymerstränge werden mit hoher Geschwindigkeit verstreckt, mit einer Spinnpräparation (auch als Spin finish bezeichnet) versehen und aufgewickelt.

Das Schmelzspinnverfahren umfasst die Schritte:

1. Herstellung der Spinnschmelze

2. Schmelzspinnen

3. Kühlen

4. Aufbringen der Spinnpräparation

5. Verstrecken

6. Nachbehandlung

Die Herstellung der Fasern aus dem aufgeschmolzenen, erfindungsgemäßen Polymermaterial erfolgt nach den bekannten Schmelzspinnverfahren. Bevorzugt werden Verfahren zur Herstellung von Monofilamentfasern, Multifilamentfasern, Vliesen, Hohlfasern, Stapelfasern, Mehrkomponentenfasern und in eine Matrix eingebettete Feinstfasern. Besonders bevorzugt ist die Herstellung von Multifilamentfasern.

Im Schritt (1) wird das durch den Mischprozess hergestellte, insektizidhaltige Polymermaterial bei Temperaturen von mindestens 10°C unterhalb der Zersetzungstemperatur und mindestens 5°C über dem Schmelzpunkt des Polymermaterials aufgeschmolzen und ohne Abkühlung zu dem Spinndüsenpaket gefördert. Bevorzugt wird das Polymermaterial bei einer Temperatur unterhalb von 250°C, besonders bevorzugt unterhalb von 235°C aufgeschmolzen und versponnen.

Die Faserherstellung kann einstufig durchgeführt werden, indem das Polymermaterial unmittelbar nach dem Mischen in Schmelzeform dem Spinnprozess zugeführt wird. In gleicher Weise ist eine zweistufige Verfahrensweise möglich, bei der das zuvor hergestellte Granulat aus dem zuvor beschriebenen Polymermaterial in einem Förderextruder oder einem beheizbaren Kolben aufgeschmolzen wird und zum Spinnpaket befördert wird.

In einer bevorzugten Ausführung wird das insektizidhaltige Polymermaterial unmittelbar nach dem Mischen in Schmelzeform dem Spinnprozess zugeführt.

Besonders bevorzugt wird das insektizidhaltige Masterbatch-Polymermaterial mit einer erhöhten Insektizidkonzentration bei der Verspinnung mit reinem Polymermaterial vermischt. Bevorzugt wird als Polymermaterial nur Polypropylen eingesetzt, das mit Metallocenen als Katalysator hergestellt wurde. Die Vermischung kann auf unterschiedliche Weise erfolgen. In einer Ausführung werden das insektizidhaltige Polymermaterial und das zusätzliche Polymermaterial über zwei separate Dosieraggregate dem Einwellenextruder, in dem die Materialien aufgeschmolzen werden, zugeführt. In einer weiteren Ausführung werden die beiden Polymermaterialien vor der Zugabe in den Einwellenextruder vermischt und dann als Vormischung dem Extruder zugeführt. In einer weiteren Ausführung werden das insektizidhaltige Polymer und das unbeladenen Polymermaterial in zwei separaten Extrudern aufgeschmolzen und diese beiden Schmelzeströme werden anschließend miteinander vermischt.

Das Spinndüsenpaket besteht aus einem bekannten Aufbau. Die Spinndüsenplatte kann eine bis mehrere tausend Düsenbohrungen mit zur Faserherstellung üblichen Lochdurchmessern besitzen. Nach dem Spinndüsenpaket passieren die Spinnfäden eine Kühlstrecke, werden mit einer Spinnpräparation versehen und aufgespult oder in Kannen abgelegt. Als Kühlmedium werden Flüssigkeiten oder Gase verwendet. Als Flüssigkeit wird Wasser verwendet. Als trockene Kühlstrecken werden Blasschächte eingesetzt, in denen die Spinnfäden mit kalter Luft, Stickstoff oder Kohlendioxid als Kühlgas abgekühlt werden.

Bei der Verspinnung wird eine Spinnpräparation auf die Fasern aufgetragen. Durch Auftragen der Spinnpräparation werden die Oberflächeneigenschaften der Fasern verändert. Die Spinnpräparation dient unter anderem zur Verringerung der Reibung zwischen Metall und Faden und zwischen den Fäden untereinander, sowie zur Reduzierung der antistatischen Aufladung der Fasern. Das Auftragen einer Spinnpräparation ist für die Durchführung des Schmelzespinnprozesses notwendig. Ohne ein angepasste Spinnpräparation ist das Auf- und Abspulen und Weiterverarbeiten von Filamentgarnen nicht möglich. Dem Fachmann ist bekannt wie er eine Spinnpräparation zu diesem Zweck anpassen muss. Dem Fachmann sind auch Spinnpräparationen bekannt. Die Menge der aufgetragenen nichtwässrigen Bestandteile der Spinnpräparation beträgt 0,1 bis 2,0 Gew.-%, bevorzugt 0,5 bis 1,5% bezogen auf die Gesamtmasse der Faser.

Die Auftragung der Spinnpräparation kann im Ausgang oder Eingang der Faserstraße, der Spul-/Abzugsmaschine, der Umspulmaschiene und/oder des Blasschachts erfolgen.

Die Spinnpräparation bzw. die Mischung aus Spinnpräparation und Wasser kann auf unterschiedliche Weise auf die Faser aufgetragen werden. Grundsätzlich ist die Auftragung durch Sprühen, Tauschen, Walzen, Stäbe und Stifte möglich.

Die Spinnpräparation kann in einer, zwei oder in mehreren Stufen zudosiert werden.

Die aufgespulten oder abgelegten Spinnfäden können nun über eine Streckanlage geführt, verstreckt und als glattes Filament aufgespult oder gegebenenfalls gekräuselt, fixiert oder zu Stapelfasern geschnitten werden.

Bevorzugt werden der Spinn- und der Streckprozess in einer Anlage ohne zwischenzeitiges Aufspulen der unverstreckten Filamente durchgeführt. Geeignete Streckanlagen sind für glatte Multifilamente Streckzwirn- oder Streckspulmaschinen oder Spinnstreckspulanlagen, für Monofilamente kompakte Monofil-Spinnstreckanlagen, für Stapelfasern Streckstraßen und Kompaktspinnstreckanlagen. Die Streckanlagen können ausgerüstet sein mit beheizbaren oder z. T. nicht beheizbaren Galetten oder Streckwerken, sowie Verlegerollen, des weiteren mit Dampf-, Heißluft- und Infrarotkanälen, Aviviervorrichtungen, Kräuseleinheiten, Trocknern, Schneidanlagen u.a. Einheiten. Im Anschluss an den Streckprozess können alle bekannten Ausrüstungsmaßnahmen durchgeführt werden, wie z.B. das Aufbringen einer Avivage.

Das Fixieren der Filamente oder Fasern wird zumeist auf diesen Anlagen nach dem Streckvorgang durchgeführt.

Die schnellgesponnenen Multifilamente können auf hierfür bekannten Maschinen strecktexturiert, die verstreckten Multifilamente texturiert werden.

Erfindungsgemäß bevorzugte Multifilamente sind solche mit 1 bis 100 Filamenten, bevorzugt 5 bis 75 Filamenten, besonders bevorzugt 10 bis 60 Filamenten.

Erfindungsgemäß werden Fasern mit einem Denier von 1000 bis 10 Denier, bevorzugt 500 bis 20 Denier, besonders bevorzugt 200 bis 50 Denier verwendet.

Die so hergestellten Fäden, Garne, Fasern oder Filamente können anschließend in beliebige Produkte weiterverarbeitet werden wie beispielsweise textile Flächengebilde. Bevorzugt sind z.B. Gewebe, Geflechte, Maschenware, Filze oder Vliesstoffe. Besonders bevorzugt sind netzartige Flächengebilde wie z.B. Bettnetze.

Die Herstellung von Geweben und Geflechten erfolgt durch zwei rechtwinklig miteinander verkreuzte Fadensysteme (Kette und Schuss). Die Maschenware kann aus einem Faden herstellt werden (Einfaden-Maschenware) oder aus mehreren Fäden (Kettfaden-Maschenware) nach der Kettfadentechnik aufgebaut sein. Diese erfindungsgemäßen Flächengebilde werden auf Wirk- oder Strickmaschinen hergestellt. Ferner können aus kurzen Fäden oder Fadenstücken Filze oder Vliesstoffe hergestellt werden.

Für die Herstellung der erfindungsgemäßen netzartigen Flächengebilde mittels Wirk- und Strickverfahren ist die Herstellung eines sogenannten Kettbaumes erforderlich. Dabei werden die Polymerfäden in gleicher Länge parallel auf eine Spule, den sogenannten Kettbaum aufgespult.

Um die Polymerfäden während der Verarbeitung zu dem erfindungsgemäßen textilen Flächengebilde gleitfähiger und strapazierfähiger zu machen, werden die Fäden häufig geschlichtet, d.h. es wird ein Schutzfilm aus Stärke oder synthetischen Schlichten überzogen. Zum Schlichten kann ein Spulöl eingesetzt werden, das während der Kettbaumherstellung aufgetragen wird, um die Spuleigenschaften während der Kettbaumherstellung zu verbessern und die Faden-Faden-Reibung sowie die Reibung zwischen Metall und Faden zu reduzieren. Die Reduzierung der Reibung ist sowohl für die Kettbaumherstellung als auch für den anschließenden Wirkprozess wichtig.

Vor der weiteren Behandlung (z.B. Bleichen und Färben) werden textile Flächengebilde aus Chemiefasern im Allgemeinen gewaschen, da die Chemiefasern geringe Mengen von Additiven an der Faseroberfläche enthalten. Dabei handelt es sich insbesondere um die oben beschriebenen Spinnpräparationen, aber auch andere Additive wie evt. aufgebrachte Schlichten werden dabei entfernt. Für diesen Waschprozess stehen verschiedene dem Fachmann allgemein bekannte Verfahren zur Verfügung. Bei einigen Verfahren wird die Waschflotte bewegt, bei anderen Fasern wird das textile Flächengebilde durch die ruhende Waschflotte bewegt. Mögliche Verfahren sind Impulswäscher, Düsenwäscher, Waschen auf Siebtrommeln, Foulards sowie Vakuumverfahren. Im technischen Maßstab sind kontinuierliche Verfahren bevorzugt.

Für Polypropylen- und Polyethylenfasern wird dieser Vorgang nach den Verfahren des Standes der Technik nicht durchgeführt, da textile Flächengebilde aus diesen Polymeren nicht mit einem Färbebad gefärbt werden können. Dies gilt insbesondere für die Herstellung von Moskitonetzen, da in diesem Fall keine weitere Veredlung des textilen Flächengebildes abgesehen von der thermischen Fixierung erfolgt.

Überraschend wurde jedoch gefunden, dass das Waschen des erfindungsgemäßen netzartigen Flächengebildes mit Wasser und einem Detergenz vor dem thermischen Fixiervorgang sich positiv auf den Verlust von Insektizid während des Waschens nach der WHOPES-Richtlinie auswirkt. Zwecks dieses Waschvorgangs sind alle oben beschriebenen Wasch-Verfahren (d.h. Impulswäscher, Düsenwäscher, Waschen auf Siebtrommeln, Foulards sowie Vakuumverfahren) anwendbar.

Das so hergestellte Flächengebilde weist häufig sehr elastische Eigenschaften auf und ist nicht formstabil. Es ist in dieser Form insbesondere für die Herstellung von Moskitonetzen nicht geeignet, da für diese Anwendung spezielle Anforderungen an den Schrumpf gestellt werden, der nach DIN EN ISO 5077 bestimmt wird. Aus diesem Grund ist die Durchführung einer thermischen Fixierung bevorzugt. Die thermische Fixierung kann mit Heißwasser, Sattdampf oder Heißluft durchgeführt werden oder in trockener Atmosphäre. Bevorzugt ist die Durchführung der Thermofixierung bei normaler Atmosphäre ohne zusätzliche Wasser- oder Dampf-Zufuhr. Für die Durchführung der thermischen Fixierung wird bevorzugt ein kontinuierliches Verfahren eingesetzt, in dem das textile Flächengebilde auf einem Spannrahmen fixiert wird und durch einen Ofen geführt wird. Dieser Ofen ist bevorzugt in mehrere Heizzonen unterteilt, die einzeln temperiert werden können. Während der thermischen Behandlung kann das textile Flächengebilde gleichzeitig in unterschiedlichem Maße durch Strecken mechanisch belastet werden. Dies wird durchgeführt, in dem die beiden Seiten des Spannrahmens im Fixierofen auseinanderfahren, bis die gewünschte Breite des Gewirks erreicht wird.

Die Temperatur des thermischen Fixiervorganges für das erfindungsgemäße netzartige Flächengebilde wird 20°C, bevorzugt 10°C unterhalb der Schmelztemperatur des Polymers gewählt. Überraschend wurde gefunden, dass das thermische Fixieren wenige Grad unterhalb der Schmelztemperatur des Polymers zu einer Verringerung des Verlustes des Insektizids während einer Waschung in Seifenlauge führt.

Neben dem oben genannten netzartigen Flächengebilden können auch Fäden, Garne, Fasern oder Filamente dem erfindungsgemäßen Waschvorgang und der erfindungsgemäßen Thermofixierung unterzogen werden. Auch diese Materialien zeigen danach die erfindungsgemäß beschriebenen technischen Effekte.

Neben der überraschend gefundenen Wirkung der Fixiertemperatur auf die Freisetzung des Insektizids aus dem erfindungsgemäßen Material während der Waschung gemäß WHOPES-Richtlinie in Seifenlauge, führen die Fixiertemperatur und die Zeitdauer des Fixiervorganges, die durch die Geschwindigkeit mit der das Gewirk durch den Fixierofen geführt bestimmt ist, zur Veränderung der Kristallstruktur im Polymer. Anhand von DSC-Messungen (DSC = Differential Scanning Calorimetry (Dynamische Differenzkalorimetrie) kann die Kristallstruktur bestimmt werden. Die Differential Scanning Calorimetry ist eine dem Fachmann bekannte Messmethode zur Bestimmung der Kristallinität von Polymeren. Mit dieser Methode wird die Wärmemenge bestimmt, die bei einer physikalischen oder chemischen Umwandlung eines Stoffes aufgebracht werden muss. Eine Beschreibung des Verfahrens findet sich u.a. in "Praxis der Thermischen Analyse von Kunststoffen", Ehrenstein, Riedel, Trawiel, Carl Hanser Verlag, München 2003. Bei einer Messung mit einer Heizrate von 10 K/min weisen die erfindungsgemäßen Materialien nur einen geringen Anteil an Kristallstrukturen auf, die oberhalb der bevorzugten Fixiertemperatur während der DSC-Messung unter üblichen Bedingungen aufschmelzen.

Beispielsweise muss zur Herstellung des erfindungsgemäßen netzartigen Flächengebildes bestehend aus dem Polypropylen HM 562 S der Firma Basell die Zeitdauer so gewählt werden, dass während einer üblichen DSC-Messung mit einer Heizrate von 10 K/min die Menge der Kristallstrukturen im erfindungsgemäßen Material, die oberhalb von 140°C aufschmilzt, mehr als 62 J/g und bevorzugt mehr als 65 J/g beträgt.

Die erfindungsgemäßen insektizidhaltigen Flächengebilde können mit gutem Erfolg zur Abtötung von schädlichen oder lästigen Gliederfüßern, insbesondere Spinnentiere und Insekten, verwendet werden. Die erfindungsgemäßen netzartigen Flächengebilde werden bevorzugt zur Herstellung von Bettnetzen zum Schutz vor Stechmücken verwendet.

Zu den Spinnentieren gehören Milben (z.B. Sarcoptes scabiei, Dermatophagoides pteronys-sinus, Dermatophagoides farinae, Dermanyssus gallinae, Acarus siro) und Zecken (z.B. Ixodes ricinus, Ixodes scapularis, Argas reflexus, Ornithodorus moubata, Boophilius microplus, Amblyomma hebraeum, Rhipicephalus sanguineus).

Zu den saugenden Insekten gehören im wesentlichen die Stechmücken (z.B. Aedes aegypti, Aedes albopictus, Aedes vexans, Culex quinquefasciatus, Culex tarsalis, Anopheles gambiae, Anopheles albimanus, Anopheles stephensi, Mansonia titillans), Schmetterlingsmücken (z.B. Phlebotomus papatasii), Gnitzen (z.B. Culicoides furens), Kriebelmücken (z.B. Simulium damnosum), Stechfliegen (z.B. Sto-moxys calcitrans), Tsetse-Fliegen (z.B. Glossina morsitans morsitans), Bremsen (z.B. Taba-nus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloro-pyga, Hypoderma bovis, Hypoderma lineatum, Dermatobia hominis, Oestrus ovis, Gaste-rophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephalides canis, Ctenocephali-des felis) und Sandflöhe (Tunga penetrans).

Zu den beißenden Insekten gehören im wesentlichen Schaben (z.B. Blattella germanica, Periplaneta americana, Blatta orientalis, Supella longipalpa), Käfer (z.B. Sitiophilus granarius, Tenebrio molitor, Dermestes lardarius, Stegobium paniceum, Anobium punctatum, Hylotrupes bajulus), Termiten (z.B. Reticulitermes lucifugus), Ameisen (z.B. Lasius niger, Monomorium pharaonis), Wespen (z.B. Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Bevorzugt werden die erfindungsgemäßen Materialien gegen Insekten, vor allem der Ordnung Diptera und ganz besonders bevorzugt gegen die Unterordnung Nematocera eingesetzt.

Ebenfalls Gegenstand der vorliegenden Erfindung ist die Verwendung des erfindungsgemäßen netzartigen Flächengebildes zur Herstellung von Bettnetzen.

Gegenstand der Erfindung sind auch Bettnetze, Moskitonetze, Gewebe, Geflechte, Maschenware, Filze, Vliesstoffe die aus einem erfindungsgemäßen netzartigen Flächengebilde bestehen (bzw. zumindest ein solches beinhalten). Erfindungsgemäß bevorzugt sind Moskitonetze und Bettnetze.

Ein weiterer Gegenstand der Erfindung bezieht sich auf Spinnfäden auf Basis eines insektizidhaltigen Polymermaterials, dadurch gekennzeichnet, dass die Spinnfäden durch folgende Schritte hergestellt werden:

a) Aufschmelzen von dem einzusetzenden Polymer sowie ein oder mehrere insektizide Wirkstoffe zusammen oder getrennt bei Temperaturen zwischen 120 und 250°C

b) die Schmelze gemäß Schritt a) zu Spinnfäden geformt und abgekühlt wird

c) optional die in Schritt b) entstandenen Spinnfäden über eine Streckanlage geführt und verstreckt werden und danach optional eine Fixierung der Fäden erfolgt

d) die Spinnfäden einer thermischen Fixierung unterzogen werden, wobei die Temperatur für den thermischen Fixiervorganges so gewählt wird, dass diese 20°C unterhalb der Schmelztemperatur des einzusetzenden Polymers liegt.

Als Polymer wird vorzugsweise Polypropylen eingesetzt, die mit Metallocenen als Katalysator hergestellt wurden.

Vorzugsweise wird bei der Herstellung der Spinnfäden bei Schritt b) eine Spinnpräparation eingesetzt.

In einer weiteren bevorzugten Ausführungsform wird bei der Herstellung der Spinnfäden vor der thermischen Fixierung in Schritt d) ein Waschschritt vorgeschaltet. Vorzugsweise wird hierzu Wasser und ein Detergenz verwendet. Die thermische Fixierung wird vorzugsweise in trockener Atmosphäre durchgeführt. Weitere bevorzugte Herstellmethoden sind oben beschrieben.

Die erfindungsgemäßen Spinnfäden können auch in Form von Fäden, Garnen, Fasern oder Filamente vorliegen und beliebig weiterverarbeitet werden. Vorzugsweise werden die Spinnfäden in einem weiteren Schritt e) zu netzartigen Flächengebilden gestrickt oder verwirkt.

Gegenstand der Erfindung sind auch Fäden, Garne, Fasern, Filamente, netzartige Flächengebilde vorzugsweise Bettnetze, Moskitonetze, Gewebe, Geflechte, Maschenware, Filze, Vliesstoffe die aus den erfindungsgemäßen Spinnfäden bestehen (bzw. zumindest solche beinhalten).

Ein weiterer Gegenstand der Erfindung bezieht sich auf netzartige Flächengebilde auf Basis eines insektizidhaltigen Polymermaterials, dadurch gekennzeichnet, dass die netzartigen Flächengebilde durch folgende Schritte hergestellt werden:

a) Aufschmelzen von dem einzusetzenden Polymer sowie ein oder mehrere insektizide Wirkstoffe zusammen oder getrennt bei Temperaturen zwischen 120 und 250°C

b) die Schmelze gemäß Schritt a) zu Spinnfäden geformt und abgekühlt wird

c) optional die in Schritt b) entstandenen Spinnfäden über eine Streckanlage geführt und verstreckt werden und danach optional eine Fixierung der Fäden erfolgt

d) stricken oder wirken der Spinnfäden zu einem netzartigen Flächengebilde,

d) die netzartigen Flächengebilde n einer thermischen Fixiervorgang unterzogen werden, wobei die Temperatur für den thermischen Fixiervorganges so gewählt wird, dass diese 20°C unterhalb der Schmelztemperatur des einzusetzenden Polymers liegt.

Als Polymer wird vorzugsweise Polypropylen eingesetzt, das mit Metallocenen als Katalysator hergestellt wurde.

Vorzugsweise wird bei der Herstellung der netzartigen Flächengebilde bei Schritt b) eine Spinnpräparation eingesetzt wird.

In einer weiteren bevorzugten Ausführungsform wird bei der Herstellung der netzartigen Flächengebilde vor der thermischen Fixierung in Schritt d) ein Waschschritt vorgeschaltet. Vorzugsweise wird hierzu Wasser und ein Detergenz verwendet. Die thermische Fixierung wird vorzugsweise in trockener Atmosphäre durchgeführt. Weitere bevorzugte Herstellmethoden sind oben beschrieben.

Gegenstand der Erfindung sind auch Bettnetze, Moskitonetze, Gewebe, Geflechte, Maschenware, Filze, Vliesstoffe die aus einem netzartigen Flächegebilde bestehen (bzw. zumindest ein solches beinhalten), welches nach dem oben beschriebenen Verfahren hergestellt wurde.

Erfindungsgemäße netzartigen Flächengebilde haben vorzugweise im Minimum 23 ganze Löcher/cm$^2$ und im Durchschnitt zwischen 23 und 29 ganze Löcher/cm$^2$.

**Beispiele:**

**Testmethoden Biologie**

**Testinsekten**

Weibliche Malariamücken (*Anopheles gambiae,* empfindlicher Stamm Kisumu), nur mit Zuckerwasser gefüttert.

**Drei-Minuten-Exposition (Kegel-Test)**

Die Tests wurden unter Benutzung von WHO Standard-Kegeln mit einer Expositionszeit von 3 Minuten an Teilproben durchgeführt. Die Netzstücke hatten eine Größe von 30 x 30 cm. Es wurden jeweils fünf Mücken gleichzeitig unter einen Kegel gegeben und vier Kegel auf einer Teilprobe verwendet. Dieselbe Probe wurde anschließend noch einmal mit vier und einmal mit zwei Kegeln getestet, d.h. 2,5 Wiederholungen mit insgesamt 50 Mücken.

Nach der Exposition wurden die Insekten in Plastikbecher zu je 10 Tieren überführt und nach 60 Minuten die Knock-down- Wirkung bestimmt. Diese bestimmt die ersten sichtbaren Anzeichen des Wirkungseintritts und ist dadurch gekennzeichnet dass die Tiere die Koordination ihrer Bewegungen verlieren und nicht mehr fliegen oder laufen können. Danach wurde ebenfalls Zuckerwasser gegeben und nach 24 Stunden die Mortalität bestimmt. Nach den Tests wurden Mittelwerte berechnet.

**Waschprozess nach WHOPES-Richtlinie**

500 ml deionisiertes Wasser mit 0,2% (w/v) Waschmittel (Le Chat, Henkel, Frankreich) wurden bei 30°C in eine 1-Liter-Glasflasche gegeben. Ein 30 x 30 cm großes Stück Netz bzw. drei 15 x 12 cm große Netzstücke wurden in die Flasche gegeben, welche in einem Wasserbad bei 30°C auf einem Horizontal-Schüttler (155 Bewegungen pro Minute) stand. Danach wurde das Wasser aus der Flasche gegossen und die Probe zweimal mit 500 ml Wasser jeweils 10 Minuten ebenfalls unter Schütteln gespült.

Die Netzproben wurden auf einer Leine hängend zwei Stunden und danach noch wenigstens 24 Stunden liegend auf Aluminiumfolie bei 27°C und 70-80% relativer Luftfeuchte getrocknet bevor erneut gewaschen oder eine Evaluierung der biologischen Wirksamkeit durchgeführt wurde.

**Analyse von Deltamethrin in Polypropylen**

**Teil A - Probenvorbereitung:**

Ca. 1 g Material einer repräsentativen Probe (Garn, Gewebe oder Granulat) wird in einen 250 ml Kolben gegeben; dann werden ungefähr 30 ml Xylol (PA Qualität) zugegeben. Das Probenmaterial wird nun unter Rückfluss (wassergekühlte Kolonne, 20 cm) und Rühren (125 Umdrehungen pro Minute, Magnet-Rührer und Rührstäbchen) bei exakt 3 Minuten im Ölbad mit 190°C gelöst. Nach Entfernen des Ölbades werden circa 10 ml Isopropanol (PA Qualität) zugegeben und der Kolben zum Abkühlen für etwa 5 Minuten bei Raumtemperatur belassen um das Polymer zu fällen. Danach wird der Extrakt mit 30 ml Acetonitril aufgefüllt.

Die Probe wird anschließend über eine Nutsche (Analysenfilter, 5 cm Durchmesser) abgesaugt und das Filtrat danach über eine Faltenfilter (MN 715, 240mm) gegeben. Beide Filtrationen werden erfolgen unter Waschung mit jeweils 10 - 20 ml Lösemittel (Acetonitril).

Abschließend wird das Filtrat quantitativ in eine 100 ml Messkolben überführt und bis zum Eichstrich mit Acetonitril aufgefüllt.

**Teil B - Quantitative Bestimmung durch HPLC mit externem Standard:**

Die Quantifizierung von Deltamethrin in Proben aus Polypropylen-Extrakten wird mittels HPLC auf einem Agilent 1100 Gerät mit binärem Pumpensystem durchgeführt. Zielmoleküle der Analyse sind Deltamethrin und das R-Alpha-Isomer. Als Referenzmaterialien werden zertifizierte Analysenstandards verwenden. Die Trennung erfolg unter Normalphasenbedingungen auf einer Merck Lichrosorb SI 60 Säule (5μ Partikel, Abmessungen 250 x 4 mm) bei 40°C Säulentemperatur.

Das Injektionsvolumen beträgt 10 μl (Probenvorbereitung siehe Teil A oben). Die Trennung erfolgt mittels einem Lösemittelgemisch von N-Heptan und Methyltertiärbutyläther (950+50, HPLC Qualität) bei einer Flussrate von 1 ml pro Minute. Die Laufzeit beträgt unter diesen Bedingungen 10 Minuten.

Für die UV Detektion bei einer Wellenlänge von 230 nm wird ein Diodenarray-Detektor verwendet. Die typische Retentionszeit beträgt unter den beschriebenen Bedingungen etwa 6,3 Minuten für das R-$\alpha$-Isomer und 7,0 Minuten für das Deltamethrin.

**Herstellung der Proben:**

Die Herstellung der Polymermaterialien erfolgte mit einem gleichsinnig drehenden, dichtkämmenden Doppelschneckenextruder mit einem Schneckendurchmesser von 34 mm und einer Gehäuselänge von 1200 mm. Die Temperatur der Extrudergehäuse betrug in allen Schritten 200°C und die Extruderdrehzahl betrug 160 U/min. Die Einzugszone des Extruders wurde mit Wasser gekühlt. In dem Extruder wurde ein sogenannter Masterbatch mit einer hohen Konzentration des Deltamethrins hergestellt. Dazu wurden in dem Extruder 10 Gew.-% Deltamethrin technisch (BCS AG, Monheim DE), 2 Gew.-% Tinuvin® 326 FL (BASF (Ciba), Ludwigshafen, Deutschland) und 88 Gew.-% Polypropylen (Metocen® HM562S, LyondellBasell, Rotterdam, Niederlande) gemischt (TK10). Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung. Das Granulat enthielt ca. 9,2 Gew.-% Deltamethrin.

In einem zweiten Schritt wurden Fäden hergestellt wobei ca. 1,1 Gew.-% des wie oben beschrieben hergestellten deltamethrinhaltigen Granulats mit 98,9 Gew.-% reinem Polypropylen (Metocen® HM562S oder Yuplen® H 893S (SK Corporation, Seoul, Korea) verdünnt wurden. Dazu wurden die Granulate jeweils in die Einzugszone eines Einschneckenextruders dosiert und aufgeschmolzen und die beiden Schmelzeströme anschließend vereinigt und gemischt. Bei der Verspinnung wurde ca. 1 Gew.-% der Spinnpräparation Stantex® 6051 (Pulcra Chemicals GmbH, Düsseldorf, Deutschland) auf die Fasern aufgetragen. Die Fasern wurden anschließend verstreckt und auf Spulen aufgewickelt. Die Dicke der Fasern betrug 210 dtex und die Fasern bestanden aus 25 Filamenten. Im zweiten Schritt erfolgte die Verstreckung der Fasern bis auf eine Dicke von 110 dtex. Für das Verstrecken der Fasern wurden drei Galettenpaare verwendet. Die Temperatur der Galettenpaare betrug 60, 80 und 120°C. Die durchschnittliche Festigkeit der Fasern betrug 4,3 cN/dtex und die Restdehnung der Fasern betrug 51 %.

Die beiden für die Verdünnung verwendeten Polypropylene unterscheiden sich unter anderem in ihrer Herstellung. Das Polypropylen Metocen® HM 562S wurde unter Verwendung eines Metallocen-Katalysators hergestellt, während das PolypropylenYuplen® H 893S mit einem Ziegler-Natta Katalysator hergestellt wurde.

Aus den ersponnenen Polypropylenfasern wurden anschließend die erfindungsgemäßen Gewirke (d.h. die erfindungsgemäßen netzartigen Flächengebilde) und die Vergleichsproben hergestellt. Dazu wurde zunächst ein Kettbaum hergestellt, in dem die Polypropylenfasern von den Einzelspulen parallel auf eine Spule, den sogenannten Kettbaum, aufgespult wurden. Diese Kettbäume wurden anschließend in einem Kettenwirkautomaten für die Gewirkherstellung verwendet.

Ein Teil des unbehandelten Gewirks wurde anschließend einem Thermofixierprozess im Labormaßstab zugeführt. Dazu wurde ein Mathis Labor Dämpfer, Typ -Nr. DHe 61599 eingesetzt. Vor der Thermofixierung wurde ein Teil der Gewirkstücke einmal gewaschen. Für 1 bis 2 Netzstücke von ca. 35 cm x 35 cm Größe werden 300 ml Leitungswasser von 30°C mit 0,1% Tween® 20 (Sigma-Aldrich Chemie GmbH, München, Deutschland) versetzt und homogenisiert. Mit Hilfe eines Glasstabes werden die Netzstücke darin 5 min gerührt, anschließend ausgewrungen und 2 x 1 min mit 300 ml entmin Wasser von ca. 15 - 20°C (ebenfalls unter Rühren) nachgespült. Dann werden die Netzstücke mindestens 1 h zur Trocknung aufgehängt. Andere Gewirkstücke wurden dem Fixierprozess ungewaschen zugeführt. Der Fixierprozess wurde bei verschiedenen Temperaturen durchgeführt.

Ferner wurde die Atmosphäre, bei der die Thermofixierung durchgeführt wurde, variiert. Die Thermofixierung wurde in einer trockenen Atmosphäre durchgeführt oder in einer mit Wasserdampf gesättigten Atmosphäre.

Die erfindungsgemäßen Proben und die Vergleichsproben wurden bezüglich ihrer biologischen Wirksamkeit und ihres Verlustes von Deltamethrin evaluiert. Anschließend erfolgte die mehrmalige Durchführung der Waschprozedur nach dem WHOPES Protokoll und weitere Evaluierungen der biologischen Wirksamkeit und des Verlustes von Deltamethrin.

### Ergebnisse

#### 1. Beispiel: Einfluss des Abwaschens von Spinnpräparation auf die biologische Wirkung

In diesem Beispiel wurde für die Herstellung der Fasern ausschließlich das Polypropylen Metocen® HM 562S eingesetzt. D.h. die Verdünnung des Masterbatches während der Verspinnung erfolgte mit diesem Polymer. Der Schmelzpunkt des Polymers Metocen® HM 562S beträgt laut Datenblatt 145 °C. Anschließend wurde aus den Fäden entsprechend dem oben beschriebenen Prozess ein Gewirk hergestellt.

Die Gewirkstücke wurden in einer dampfhaltigen Atmosphäre bei unterschiedlichen Temperaturen für 90 Sekunden thermofixiert. Eine Hälfte der Gewirkstücke wurde vor der Thermofixierung entsprechend der oben beschriebenen Prozedur gewaschen, um die auf den Fasern vorhandene Spinnpräparation zu entfernen, die andere Hälfte der Gewirkstücke wurde vor der Thermofixierung nicht weiter behandelt. Auf den Fäden dieser Gewirkstücke war die Spinnpräparation noch vorhanden.

Die Gewirkstücke wurden zunächst entsprechend der oben beschriebenen Prozedur bezüglich ihrer biologischen Wirksamkeit getestet. Anschließend wurden die Gewirkstücke entsprechend dem oben beschriebenen Waschprozess nach WHOPES-Richtlinie 5, 10, 15, 20, 25 und 30 Mal hintereinander gewaschen und jeweils danach bezüglich ihrer biologischen Wirksamkeit evaluiert.

**Tabelle 1:** Einfluss der Spinnpräparation auf die biologische Wirkung

| Temperatur bei der Thermofixierung [°C] | Anzahl der Waschungen nach WHOPES Protokoll [-] | Knock down nach 60 min | | Mortalität nach 24 h | |
|---|---|---|---|---|---|
| | | Vor der Thermofixierung gewaschene Proben | Vor der Thermofixierung ungewaschene Proben | Vor der Thermofixierung gewaschene Proben | Vor der Thermofixierung ungewaschene Proben |
| 110 | 0 | 100% | 100% | 100% | 100% |
| 120 | 0 | 100% | 100% | 100% | 100% |
| 130 | 0 | 100% | 100% | 100% | 100% |
| 140 | 0 | 100% | 100% | 100% | 100% |
| 110 | 5 | 100% | 100% | 100% | 100% |
| 120 | 5 | 100% | 100% | 100% | 100% |
| 130 | 5 | 100% | 100% | 100% | 100% |
| 140 | 5 | 100% | 100% | 100% | 100% |

(fortgesetzt)

| Temperatur bei der Thermofixierung [°C] | Anzahl der Waschungen nach WHOPES Protokoll [-] | Knock down nach 60 min | | Mortalität nach 24 h | |
|---|---|---|---|---|---|
| | | Vor der Thermofixierung gewaschene Proben | Vor der Thermofixierung ungewaschene Proben | Vor der Thermofixierung gewaschene Proben | Vor der Thermofixierung ungewaschene Proben |
| 110 | 10 | 100% | 95% | 95% | 95% |
| 120 | 10 | 97% | 88% | 97% | 88% |
| 130 | 10 | 98% | 100% | 100% | 100% |
| 140 | 10 | 100% | 98% | 100% | 98% |
| 110 | 15 | 98% | 85% | 94% | 52% |
| 120 | 15 | 96% | 82% | 96% | 53% |
| 130 | 15 | 100% | 89% | 95% | 89% |
| 140 | 15 | 100% | 91% | 100% | 100% |
| 110 | 20 | 100% | 95% | 97% | 84% |
| 120 | 20 | 98% | 95% | 100% | 76% |
| 130 | 20 | 100% | 63% | 100% | 37% |
| 140 | 20 | 100% | 90% | 100% | 95% |
| 110 | 25 | 100% | 88% | 100% | 80% |
| 120 | 25 | 95% | 80% | 95% | 59% |
| 130 | 25 | 98% | 80% | 93% | 78% |
| 140 | 25 | 100% | 88% | 98% | 93% |
| 110 | 30 | 95% | 85% | 100% | 89% |
| 120 | 30 | 96% | 70% | 96% | 54% |
| 130 | 30 | 100% | 83% | 100% | 90% |
| 140 | 30 | 100% | 93% | 95% | 98% |

Die Ergebnisse zeigen, dass durch das Abwaschen der Spinnpräparation vor der Thermofixierung eine wesentlich bessere biologische Wirkung nach 15 Waschungen nach WHOPES-Richtlinie erreicht wird.

Für die vor der Thermofixierung gewaschenen Proben zeigt sich ein Zusammenhang zwischen der Temperatur, die bei der Thermofixierung gewählt wurde und der biologischen Wirksamkeit. Je näher die Temperatur am Schmelzpunkt des Polymers liegt, desto höher ist die biologische Wirkung.

Die Temperatur bei der Thermofixierung muss daher höchstens 20°C und bevorzugt höchstens 10°C unterhalb der Schmelztemperatur des Polymers liegen, damit eine maximale biologische Wirksamkeit erreicht wird.

## 2. Beispiel: Einfluss des Abwaschens von Spinnpräparation auf den Verlust von Deltamethrin

Für Beispiel 2 wurden die gleichen Gewirke verwendet, deren Herstellung in Beispiel 1 beschrieben wurde. Die Proben wurden nach oben beschriebener Prozedur bezüglich des Deltamethringehaltes untersucht.

**Tabelle 2:** Verlust Deltamethrin

| Temperatur bei der Thermofixierung [°C] | Anzahl der Wa-Anzahl der schungen nach WHOPES Protokoll [-] | Deltamethringehalt | | Retentionsindex | |
|---|---|---|---|---|---|
| | | Vor der Thermofixierung gewaschene Proben | Vor der Thermofixierung ungewaschene Proben | Vor der Thermofixierung gewaschene Proben | Vor der Thermofixierung ungewaschene Proben |
| 110 | 0 | 100% | 100% | | |
| 120 | 0 | 100% | 100% | | |
| 130 | 0 | 100% | 100% | | |
| 140 | 0 | 100% | 100% | | |
| 110 | 5 | 64% | 32% | 91,4% | 79,4% |
| 120 | 5 | 69% | 38% | 92,8% | 82,3% |
| 130 | 5 | 79% | 51% | 95,3% | 87,4% |
| 140 | 5 | 82% | 34% | 96,0% | 80,4% |
| 110 | 10 | 53% | 26% | 93,8% | 87,2% |
| 120 | 10 | 57% | 30% | 94,5% | 88,7% |
| 130 | 10 | 63% | 39% | 95,5% | 91,1% |
| 140 | 10 | 84% | 54% | 98,2% | 94,0% |
| 110 | 15 | 52% | 22% | 95,8% | 90,4% |
| 120 | 15 | 59% | 30% | 96,5% | 92,3% |
| 130 | 15 | 61% | 34% | 96,8% | 93,0% |
| 140 | 15 | 79% | 50% | 98,5% | 95,4% |
| 110 | 30 | 43% | 23% | 97,2% | 95,2% |
| 120 | 30 | 49% | 23% | 97,6% | 95,2% |
| 130 | 30 | 53% | 28% | 97,9% | 95,8% |
| 140 | 30 | 63% | 39% | 98,5% | 96,9% |

Der Gehalt an Deltamethrin nach der Thermofixierung wurde zu 100% gesetzt und die Gewirkstücke wurden anschließend nach 5, 10, 15 und 30 Waschungen entsprechend des WHOPES-Protokolls bezüglich ihres Deltamethringehalts untersucht.

Die Ergebnisse zeigen, dass die Temperatur bei der Thermofixierung höchstens 20°C und bevorzugt höchstens 10°C unterhalb der Schmelztemperatur des Polymers liegen muss, damit der Verlust an Deltamethrin aus dem erfindungsgemäßen Gewirk möglichst gering ist.

**3. Beispiel: Einfluss des Abwaschen von Spinnpräparation auf die Wirkstoffstabilität während der Lagerung**

Für Beispiel 3 wurden die gleichen Gewirke verwendet, deren Herstellung in Beispiel 1 beschrieben wurde. Die Proben wurden direkt nach der Herstellung bezüglich der Wirkstoffstabilität nach einer Lagerung von 2 Wochen bei 54°C untersucht. Mit diesen Lagerbedingungen wird eine Mindesthaltbarkeit von 2 Jahren simuliert. Die Lagerung erfolgte in einem Trockenschrank Heraues Thermo Scientifics Typ B620. Die Temperatur von 54°C wurde laufend überwacht. Die Netzproben wurden für die Lagerung 2 bis 4 lagig in Aluminiumfolie verpackt.

Die Proben wurden 2 Wochen bei 54°C gelagert und anschließend entsprechend der oben beschriebenen Methode bezüglich ihres Gehaltes an R-$\alpha$-Isomer des Deltamethrins untersucht:

**Tabelle 3:** Anteil R-$\alpha$-Isomer nach Lagerung

| Temperatur bei der Thermofixierung [°C] | R-$\alpha$-Isomer des Deltamethrins | |
|---|---|---|
| | Vor der Thermofixierung ungewaschene Proben | Vor der Thermofixierung gewaschene Proben |
| 110 | 50,74% | 5,07% |
| 120 | 43,58% | 5,68% |
| 130 | 45,74% | 4,66% |
| 140 | 51,11% | 5,42% |

Die Ergebnisse zeigen, dass durch das Abwaschen des Spinnpräparation die Bildung von R-$\alpha$-Isomer während der Lagerung auf unter 10% reduziert werden kann.

### 4. Beispiel: Einfluss der Atmosphäre

Für Beispiel 4 wurden die gleichen Gewirke verwendet, deren Herstellung in Beispiel 1 beschrieben wurde. Die folgende Tabelle zeigt den Einfluss der Atmosphäre bei der Thermofixierung auf den Verlust an Deltamethrin während der Durchführung von Waschungen nach der WHOPES-Richtlinie. Die Gewirkstücke wurden alle bei 140°C für 90 Sekunden thermofixiert. Dabei wurde die Atmosphäre im Fixierofen variiert. Die eine Hälfte der Gewirkstücke wurde in einer normalen Atmosphäre ohne Zusatz von Wasser oder Dampf (trockene Atmosphäre) thermofixiert und die anderen Gewirkstücke wurden in der Gegenwart von Dampf thermofixiert.

**Tabelle 4:** Einfluss der Atmosphäre bei der Thermofixierung

| Atmosphäre [-] | Anzahl der Waschungen nach WHOPES Protokoll [-] | Deltamethringehalt [%] |
|---|---|---|
| Dampf | 0 | 100% |
| trocken | 0 | 100% |
| Dampf | 5 | 82% |
| trocken | 5 | 90% |
| Dampf | 10 | 84% |
| trocken | 10 | 86% |
| Dampf | 15 | 79% |
| trocken | 15 | 81% |
| Dampf | 30 | 63% |
| trocken | 30 | 69% |

Die Ergebnisse zeigen, dass bei Einsatz einer trockenen Atmosphäre während der Thermofixierung der Verlust an Deltamethrin während der Waschungen nach WHOPES-Richtlinie geringer ausfällt.

### 5. Beispiel: Einfluss des Polypropylentyps auf die biologische Wirksamkeit

In diesem Beispiel wurde für die Herstellung der Fasern das Polypropylen Metocen® HM 562S und das Polypropylen Yuplen® H 893S eingesetzt, d.h. die Verdünnung des Masterbatches während der Verspinnung erfolgte jeweils mit einem dieser Polymere. Anschließend wurde aus den Fäden entsprechend dem oben beschriebenen Prozess ein Gewirk hergestellt.

Die Gewirkstücke wurden in einer trockenen Atmosphäre bei unterschiedlichen Temperaturen für 90 Sekunden thermofixiert. Die Gewirkstücke wurde vor der Thermofixierung entsprechend der oben beschriebenen Prozedur gewaschen, um die auf den Fasern vorhandene Spinnpräparation zu entfernen.

Nach der Thermofixierung wurden die Gewirkproben entsprechend der WHOPES-Richtlinie 20 Waschungen unterzogen und wie oben beschrieben bezüglich ihrer biologischen Wirksamkeit getestet.

**Tabelle 5:** Einfluss des Polypropylentyps auf die biologische Wirksamkeit nach 20 Waschungen

| Temperatur bei der Thermofixierung [°C] | Knock down Yuplen® H 893S | Knock Down Metocen® HM562S | Mortalität Yuplen® H 893S | Mortalität Metocen® HM562S |
|---|---|---|---|---|
| 70 | 90% | 98% | 74% | 98% |
| 90 | 64% | 98% | 66% | 100% |
| 110 | 85% | 98% | 90% | 100% |
| 120 | 86% | 95% | 74% | 93% |
| 130 | 100% | 100% | 100% | 100% |
| 140 | 100% | 100% | 100% | 100% |

Die Ergebnisse zeigen, dass bei der Verwendung eines mit einem Metallocen-Katalysator hergestellten Polypropylens eine höhere biologische Wirksamkeit erreicht wird als bei der Verwendung eines Polypropylens, dass unter Verwendung eines Ziegler-Natta Katalysators hergestellt wurde.

**6. Beispiel: Einfluss unterschiedlicher UV-Stabilisatoren auf die Isomerisierung von Deltamethrin**

Die Herstellung der erfindungsgemäßen Polymermaterialien erfolgte mit einem gleichsinnig drehenden, dichtkämmenden Doppelschneckenextruder mit einem Schneckendurchmesser von 34 mm und einer Gehäuselänge von 1200 mm. Die Temperatur der Extrudergehäuse betrug in allen Schritten 200°C und die Extruderdrehzahl betrug 160 U/min. Die Einzugszone des Extruders wurde mit Wasser gekühlt. Der Gesamtdurchsatz betrug 20 kg/h.

In einem ersten Schritt wurden Polymergranulate mit einer Konzentration von 2 Gew.-% Deltamethrin hergestellt. Dazu wurden 2 Gew.-% Deltamethrin technisch (BCS AG, Monheim DE) und 98 Gew.-% Polypropylen (Metocen® HM562S, LyondellBasell, Rotterdam, Niederlande) in dem Extruder gemischt. Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung.

Im zweiten Schritt wurden Polymergranulate mit 1 bzw. 5 Gew.-% UV-Stabilisator hergestellt. Dazu wurden 1 Gew.-% bzw. 5 Gew.-% des UV-Stabilisators und 99 bzw. 95 Gew.-% Polypropylen (Metocen® HM562S, LyondellBasell, Rotterdam, Niederlande) in dem Extruder gemischt. Alle Materialien wurden der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung.

Im dritten Schritt wurden die beiden zuvor hergestellten Granulate mit Deltamethrin bzw. UV-Stabilisator mit Polyproyplen so in dem Extruder gemischt, dass eine nominale Konzentration von 1 Gew.-% Deltamethrin und eine Konzentration des UV-Stabilisators von 0,2 Gew.-% erreicht wurde (TK1). Dazu wurden 50% des Granulats mit Deltamethrin, 20% bzw. 4% des Granulats mit UV-Stabilisator und 30% bzw. 46% Polypropylen in einem Taumelmischer vermischt und diese Mischung mit einem gleichsinnig drehenden, dichtkämmenden Doppelschneckenextruder unter den zuvor genannten Bedingungen extrudiert. Die Granulatmischung wurde der Einzugszone des Extruders in fester Form zugeführt. Die Mischung trat aus dem Extruder in Form von Strängen aus und die Stränge wurden in einem Wasserbad abgekühlt. Anschließend erfolgte eine Zerkleinerung der Stränge durch Granulierung. Das Granulat enthielt ca. 0,9 Gew.-% Deltamethrin.

Aus dem insektizidhaltigen Polymermaterial wurden Folien mit einer Dicke von ca. 50 μm hergestellt. Dazu wurde das Polymermaterial zunächst bei 30°C für 4 bis 17 h getrocknet. Anschließend wurde es in einem Einwellenextruder aufgeschmolzen und durch eine Breitschlitzdüse extrudiert. Die Temperatur des Einwellenextruders wurde zwischen 220 und 250°C variiert. Die extrudierten Folien wurden mit einem Glättwerk abgezogen. Die Temperatur der ersten Walze des Glättwerks betrug ca. 85°C und die Temperatur der zweiten Walze des Glättwerks betrug ca. 60°C.

In den Versuchen wurden die folgenden UV-Stabilisatoren eingesetzt:

**Tabelle 6:** UV-Stabilisatoren

| Handelsname | Herstellerfirma | Substanzklasse |
|---|---|---|
| Chimasorb® 2020 | BASF (Ciba), Ludwigshafen, Deutschland | 1,6-Hexanediamine, N, N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4- (CAS 192268-64-7) piperidinamine |
| Tinuvin® 326 | BASF (Ciba), Ludwigshafen, Deutschland | Bumetrizol, 2-(5-chloro-2H-benzotriazole-2-yl)-6-(1,1-dimethylethyl)-4-methyl-phenol (CAS 3896-11-5) |
| Tinuvin® 571 FF | BASF (Ciba), Ludwigshafen, Deutschland | Triazinverbindung, Phenol, 2-(2H-benzotriazol-2-yl)-6-dodecyl-4-methyl-, branched and linear (CAS 125304-04-3) |
| Tinuvin® 783 FDL | BASF (Ciba), Ludwigshafen, Deutschland | Poly[[6-[(1,1,3,3-tetramethylbutyl)amino]-1,3,5-triazin-2,4-diyl] [(2,2,6,6-Tetramethyl-4-piperidinyl)imino]-1,6-hexanediyl[(2,2,6,6-tetramethyl-4-piperidinyl)imino]]), (CAS 71878-19-8), Butanedioic acid, dimethylester, polymer mit 4-hydroxy-2,2,6,6-tetramethyl-1-piperidin ethanol (CAS 65447-77-0) |

Die Folien wurden anschließend unter Verwendung der oben genannten Analysemethoden bezüglich ihres Deltamethringehaltes analysiert:

**Tabelle 7:** Gehalt an R-$\alpha$-Isomer

| UV-Stabilisator | Extrusionstemperatur | Gehalt Deltamethrin (DLT) | Gehalt R-$\alpha$-Isomer |
|---|---|---|---|
| | [°C] | [Gew.-%] | [% von DLT] |
| Chimasorb® 2020 | 220 | 0,859 | 9,989 |
| Chimasorb® 2020 | 240 | 0,883 | 12,503 |
| Chimasorb® 2020 | 250 | 0,888 | 14,496 |
| Tinuvin® 326 | 220 | 0,986 | 0,785 |
| Tinuvin® 326 | 240 | 0,979 | 0,000 |
| Tinuvin® 326 | 250 | 0,931 | 0,868 |
| Tinuvin® NOR 371 FF | 220 | 0,879 | 2,471 |
| Tinuvin® NOR 371 FF | 240 | 0,906 | 3,713 |
| Tinuvin® NOR 371 FF | 250 | 0,944 | 4,677 |
| Tinuvin® 783 FDL | 220 | 0,871 | 8,999 |
| Tinuvin® 783 FDL | 240 | 0,861 | 10,858 |
| Tinuvin® 783 FDL | 250 | 0,882 | 12,154 |

Die Ergebnisse zeigen, dass zur UV-Stabilisierung keine sterisch gehinderten Amine eingesetzt werden dürfen, um bei der weiteren Verarbeitung der erfindungsgemäßen Polymermaterialien eine Isomerisierung von mehr als 10% des Deltamethrins zu verhindern.

**7. Beispiel: Stand der Technik: Gecoatete PET-Netze**

Das insektizidbeladene Netz Permanet von der Firma Vestergaard Frandsen S.A., Schweiz wurde bezüglich der biologischen Wirksamkeit und des Gehaltes von Deltamethrin evaluiert. Anschließend erfolgte die mehrmalige Durchführung der Waschprozedur nach dem WHOPES Protokoll und weitere Evaluierungen der biologischen Wirksamkeit und des Verlustes von Deltamethrin.

Die Bestimmung des Deltamethringehaltes des Netzes erfolgte in gleicher Weise wie für das Polypropylen-Netz beschrieben.

**Tabelle 8:** Gehalt Deltamethrin und Retentionsindex

| Anzahl der Waschungen nach WHOPES Protokoll [-] | Knock down nach 60 min | Mortalität nach 24 h | Gehalt Deltamethrin (DLT) [Gew.-%] | Retentionsindex [-] |
|---|---|---|---|---|
| 0 | 100 | 100 | 0,208 | 0 |
| 5 | 100 | 100 | 0,086 | 84% |
| 10 | 98 | 100 | 0,066 | 89% |
| 15 | 97 | 84 | 0,059 | 92% |
| 20 | 84 | 72 | 0,050 | 93% |
| 25 | 69 | 64 | 0,040 | 94% |
| 30 | 70 | 61 | 0,042 | 95% |

Das insektizidbeladene Netz Permanet von der Firma Vestergaard Frandsen S.A., Schweiz wurde bezüglich der Wirkstoffstabilität nach einer Lagerung von 2 Wochen bei 54°C untersucht. Mit diesen Lagerbedingungen wird eine Mindesthaltbarkeit von 2 Jahren simuliert. Die Proben wurden 2 Wochen bei 54°C gelagert und anschließend entsprechend der oben beschriebenen Methode bezüglich ihres Gehaltes an R-$\alpha$-Isomer des Deltamethrins untersucht. Es wurde eine Doppelbestimmung durchgeführt.

**Tabelle 9:** Gehalt R-$\alpha$-Isomer

| R-$\alpha$-Isomer des DLT | |
|---|---|
| Vor Lagerung 2 Wochen 54°C | Nach Lagerung 2 Wochen 54°C |
| 3,35% | 47,44% |
| 3,51% | 35,35% |

Die Ergebnisse zeigen, dass dieses kommerziell erhältliche Netz die WHO-Anforderungen bezüglich Knock-Down und Mortalität nur für 15 Wäschen erfüllt und nach 5 Wäschen einen Retentionsindex von weniger als 95% aufweist. Ferner beträgt der Gehalt an R-$\alpha$-Isomer nach einer Lagerung von 2 Wochen bei 54°C deutlich mehr als 30%.

**8. Beispiel: Stand der Technik: PE-Netze**

Die insektizidbeladenen Netze Netprotect® (BESTNET EUROPE LTD., Großbritannien) und Duranet® (Clarke Products, USA) wurden bezüglich der biologischen Wirksamkeit evaluiert. Anschließend erfolgte die mehrmalige Durchführung der Waschprozedur nach dem WHOPES Protokoll und weitere Evaluierungen der biologischen Wirksamkeit.

**Tabelle 10:** Biologische Wirksamkeit

| Anzahl der Waschungen nach WHOPES Protokoll [-] | Netprotect® | | Duranet® | |
|---|---|---|---|---|
| | Knock down nach 60 min [%] | Mortalität nach 24 h [%] | Knock down nach 60 min [%] | Mortalität nach 24 h [%] |
| 0 | 100 | 100 | 100 | 100 |
| 5 | 93 | 83 | 100 | 98 |
| 10 | 66 | 44 | 100 | 98 |
| 15 | 19 | 57 | 95 | 95 |
| 20 | 7 | 14 | 64 | 70 |
| 25 | n.b. | n.b. | 64 | 70 |
| 30 | n.b. | n.b. | 51 | 51 |

(fortgesetzt)

| Anzahl der Waschungen nach WHOPES Protokoll [-] | Netprotect® | | Duranet® | |
|---|---|---|---|---|
| | Knock down nach 60 min [%] | Mortalität nach 24 h [%] | Knock down nach 60 min [%] | Mortalität nach 24 h [%] |
| 35 | n.b. | n.b. | 41 | 41 |
| n.b. = nicht bestimmt. | | | | |

Die Ergebnisse zeigen deutlich, dass die getesteten handelsüblichen Netze basierend auf Polyethylen als Fasermaterial bereits nach deutlich weniger als 35 Waschungen die WHOPES-Richtlinie bezüglich der biologischen Wirksamkeit nicht mehr erfüllen.

**Patentansprüche**

1. Verfahren zur Herstellung des netzartigen Flächengebildes auf Basis eines Deltamethrin haltigen Polypropylen Polymermaterials, welches gemäß WHOPES-Richtlinie nach der Durchführung von mindestens 25 Waschungen einen Knock-down nach 60 Minuten zwischen 95% und 100% oder eine Mortalität nach 24 Stunden zwischen 80% und 100% aufweist, wobei zunächst das Polypropylen sowie Deltamethrin zusammen oder getrennt bei Temperaturen zwischen 120 und 250°C aufgeschmolzen werden, die Schmelze zu Spinnfäden geformt und abgekühlt wird, die entstandenen Spinnfäden über eine Streckanlage geführt und verstreckt werden sowie anschließendes Aufspulen der Polymerfäden in gleicher Länge parallel auf eine Spule und stricken oder wirken zu einem netzartigen Flächengebilde, welches anschließend einem thermischen Fixiervorgang unterzogen wird, **dadurch gekennzeichnet, dass** das netzartige Flächengebilde vor der thermischen Fixierung mit Wasser und einem Detergenz gewaschen wird und/oder die Temperatur für den thermischen Fixiervorganges so gewählt wird, dass diese höchstens 20°C unterhalb der Schmelztemperatur des einzusetzenden Polypropylens liegt.

2. Verfahren gemäß Anspruch 1, **dadurch gekennzeichnet, dass** bei der Verspinnung der Fäden ein Spinnpräparation eingesetzt wird.

3. Spinnfäden auf Basis eines Deltamethrin haltigen Polypropylen Polymermaterials, **dadurch gekennzeichnet, dass** die Spinnfäden durch folgende Schritte hergestellt werden:

   a) Aufschmelzen von dem einzusetzenden Polymer sowie ein oder mehrere insektizide Wirkstoffe zusammen oder getrennt bei Temperaturen zwischen 120 und 250°C,
   b) die Schmelze gemäß Schritt a) zu Spinnfäden geformt und abgekühlt wird,
   c) optional die in Schritt b) entstandenen Spinnfäden über eine Streckanlage geführt und verstreckt werden,
   d) die Spinnfäden einem thermischen Fixiervorgang unterzogen werden, wobei die Spinnfäden vor der thermischen Fixierung mit Wasser und einem Detergenz gewaschen werden und/oder die Temperatur für den thermischen Fixiervorganges so gewählt wird, dass diese höchstens 20°C unterhalb der Schmelztemperatur des einzusetzenden Polypropylens liegt.

4. Netzartiges Flächengebilde auf Basis eines Deltamethrin haltigen Polypropylen Polymermaterials, **dadurch gekennzeichnet, dass** die netzartigen Flächengebilde durch folgende Schritte hergestellt werden:

   a) Aufschmelzen von dem einzusetzenden Polypropylens sowie von Deltamethrin zusammen oder getrennt bei Temperaturen zwischen 120 und 250°C,
   b) die Schmelze gemäß Schritt a) zu Spinnfäden geformt und abgekühlt wird,
   c) optional die in Schritt b) entstandenen Spinnfäden über eine Streckanlage geführt und verstreckt werden,
   d) Stricken oder wirken der Spinnfäden zu einem netzartigen Flächengebilde,
   e) die netzartigen Flächengebilde einem thermischen Fixiervorgang unterzogen werden, wobei die Temperatur für den thermischen Fixiervorganges so gewählt wird, dass diese höchstens 20°C unterhalb der Schmelztemperatur des einzusetzenden Polypropylens liegt und/oder die netzartigen Flächengebilde vor der thermischen Fixierung mit Wasser und einem Detergenz gewaschen werden.

5. Bettnetze, Moskitonetze, Gewebe, Geflechte, Maschenware, Filze, Vliesstoffe bestehend aus einem netzartigen Flächegebilde gemäß Anspruch 4 oder aus Spinnfäden gemäß Anspruch 3.


**Claims**

1. Process for producing the netlike fabric based on a deltamethrin-containing polypropylene polymer material which in accordance with WHOPES guideline achieves a knockdown after 60 minutes of between 95% and 100% or a mortality after 24 hours of between 80% and 100% after at least 25 washes, wherein first the polypropylene and deltamethrin are melted together or separately at temperatures between 120 and 250°C, the melt is formed into spun threads and cooled, the spun threads formed are led through a drawing system and drawn and also subsequent winding of the polymer threads in equal length in a parallel arrangement on a bobbin and knitting to form a netlike fabric which is subsequently subjected to a heat-setting operation, **characterized in that** the netlike fabric is washed prior to the heat-setting with water and a detergent and/or the temperature for the heat-setting operation is chosen to be at most 20°C below the melting temperature of the polypropylene to be used.

2. Process according to Claim 1, **characterized in that** a spin finish is used in the course of the spinning of the threads.

3. Spun threads based on a deltamethrin-containing polypropylene polymer material, **characterized in that** the spun threads are obtained by the following steps:

   a) melting the polymer to be used and one or more insecticidally active ingredients together or separately at temperatures between 120 and 250°C,
   b) forming the melt of step a) into spun threads and cooling,
   c) optionally leading the spun threads formed in step b) through a drawing system and drawing,
   d) subjecting the spun threads to a heat-setting operation wherein the spun threads are washed prior to the heat-setting with water and a detergent and/or the temperature for the heat-setting operation is chosen to be at most 20°C below the melting temperature of the polypropylene to be used.

4. Netlike fabric based on a deltamethrin-containing polypropylene polymer material, **characterized in that** the netlike fabrics are produced by the following steps:

   a) melting the polypropylene to be used and deltamethrin together or separately at temperatures between 120 and 250°C,
   b) forming the melt of step a) into spun threads and cooling,
   c) optionally leading the spun threads formed in step b) through a drawing system and drawing,
   d) knitting the spun threads to form a netlike fabric,
   e) subjecting the netlike fabrics to a heat-setting operation wherein the temperature for the heat-setting operation is chosen to be at most 20°C below the melting temperature of the polypropylene to be used and/or the netlike fabrics are washed prior to the heat-setting with water and a detergent.

5. Bed nets, mosquito nets, wovens, braids, knits, felts, nonwovens consisting of a netlike fabric according to Claim 4 or of spun threads according to Claim 3.


**Revendications**

1. Procédé de fabrication d'une structure plane en réseau à base d'un matériau polymère de polypropylène contenant de la deltaméthrine, qui présente selon la directive WHOPES après la réalisation d'au moins 25 lavages un knock-down après 60 minutes compris entre 95 % et 100 % ou une mortalité après 24 heures comprise entre 80 % et 100 %, selon lequel le polypropylène et la deltaméthrine sont tout d'abord fondus ensemble ou séparément à des températures comprises entre 120 et 250 °C, la masse fondue est mise sous la forme de fils et refroidie, les fils formés sont conduits dans une unité d'étirement et étirés, puis les fils polymères sont embobinés parallèlement en longueur identique sur une bobine et tricotés en une structure plane en réseau, qui est ensuite soumise à un processus de fixation thermique, **caractérisé en ce que** la structure plane en réseau est lavée avec de l'eau et un détergent avant la fixation thermique et/ou la température pour le processus de fixation thermique est choisie de sorte que celle-ci se situe au plus 20 °C en dessous de la température de fusion du polypropylène utilisé.

2. Procédé selon la revendication 1, **caractérisé en ce qu'**une préparation de filage est utilisée lors du filage des fils.

3.  Fils à base d'un matériau polymère de polypropylène contenant de la deltaméthrine, **caractérisés en ce que** les fils sont fabriqués par les étapes suivantes :

    a) la fusion du polymère utilisé et d'un ou de plusieurs agents actifs insecticides ensemble ou séparément à des températures comprises entre 120 et 250 °C,
    b) la masse fondue selon l'étape a) est mise sous la forme de fils et refroidie,
    c) les fils formés à l'étape b) sont éventuellement conduits dans une unité d'étirement et étirés,
    d) les fils sont soumis à un processus de fixation thermique, les fils étant lavés avec de l'eau et un détergent avant la fixation thermique et/ou la température pour le processus de fixation thermique étant choisie de sorte que celle-ci se situe au plus 20 °C en dessous de la température de fusion du polypropylène utilisé.

4.  Structure plane en réseau à base d'un matériau polymère de polypropylène contenant de la deltaméthrine, **caractérisée en ce que** la structure plane en réseau est fabriquée par les étapes suivantes :

    a) la fusion du polypropylène utilisé et de deltaméthrine ensemble ou séparément à des températures comprises entre 120 et 250 °C,
    b) la masse fondue selon l'étape a) est mise sous la forme de fils et refroidie,
    c) les fils formés à l'étape b) sont éventuellement conduits dans une unité d'étirement et étirés,
    d) le tricotage des fils en une structure plane en réseau,
    e) les structures planes en réseau sont soumises à un processus de fixation thermique, la température pour le processus de fixation thermique étant choisie de sorte que celle-ci se situe au plus 20 °C en dessous de la température de fusion du polypropylène utilisé et/ou les structures planes en réseau étant lavées avec de l'eau et un détergent avant la fixation thermique.

5.  Moustiquaires de lit, moustiquaires, tissus, treillis, tricots, feutres, non-tissés constitués d'une structure plane en réseau selon la revendication 4 ou de fils selon la revendication 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008004711 A2
- WO 2008032844 A
- WO 9729634 A
- WO 9901030 A
- WO 05044001 A
- WO 2009121580 A
- DE 4136694 A
- DE 102005054653 A

**In der Beschreibung aufgeführte Nicht-Patentliteratur**

- Report of the Eleventh WHOPES Working Group Meeting. WHO, Dezember 2007, 10-13
- **KAISER.** *Kunststoffchemie für Ingenieure,* 246-254
- *CHEMICAL ABSTRACTS,* 125304-04-3
- *CHEMICAL ABSTRACTS,* 3896-11-5
- **EHRENSTEIN ; RIEDEL ; TRAWIEL.** Praxis der Thermischen Analyse von Kunststoffen. Carl Hanser Verlag, 2003
- *CHEMICAL ABSTRACTS,* 192268-64-7
- *CHEMICAL ABSTRACTS,* 71878-19-8
- *CHEMICAL ABSTRACTS,* 65447-77-0